# EUROPÄISCHE PATENTSCHRIFT

(11) **EP 1 321 804 B1**
(45) Veröffentlichungstag und Bekanntmachung des Hinweises auf die Patenterteilung: **30.05.2007**
(21) Anmeldenummer: 01130409.4
(22) Anmeldetag: 20.12.2001
(51) Int. Cl.: G03B 42/04

(54) **Speicherleuchtstofffolie für Röntgenaufnahmen**
Stimulable phosphor sheet for x-ray photography
Feuille luminescente stimulable pour radiographie

(43) Veröffentlichungstag der Anmeldung: 25.06.2003
(73) Patentinhaber: Agfa-Gevaert HealthCare GmbH, 51373 Leverkusen (DE)
(72) Erfinder: Stahl, Werner, 85551 Heimstetten (DE); Klabunde, Olaf, 85635 Höhenkirchen-Siegertsbrunn (DE)

(56) Entgegenhaltungen:
- EP-A- 0 851 290
- US-A- 5 265 865
- PATENT ABSTRACTS OF JAPAN vol. 2000, no. 11, 3. Januar 2001 (2001-01-03) -& JP 2000 235239 A (FUJI PHOTO FILM CO LTD), 29. August 2000 (2000-08-29)

## Beschreibung

Die vorliegende Erfindung betrifft eine Speicherleuchtstoffplatte zum Abspeichern von Bildinformationen, wobei diese Speicherleuchtstoffplatte eine Trägerschicht und eine Speicherleuchtstoffschicht aufweist, sowie eine Röntgenkassette.

Insbesondere für medizinische Zwecke wird von einem Objekt, beispielsweise einem Patienten, mittels einer Röntgenstrahlung ein Bild erzeugt, das in einer Speicherleuchtstoffplatte als latentes Bild abgespeichert wird. Zum Auslesen des in einer Speicherleuchtstoffschicht der Speicherleuchtstoffplatte abgespeicherten Röntgenstrahlungsbildes wird die Speicherleuchtstoffschicht mittels einer Strahlungsquelle angeregt. Die Speicherleuchtstoffschicht emittiert daraufhin aufgrund dieser Anregung Licht, das eine Intensität aufweist, die proportional ist zur Menge von in der Speicherleuchtstoffschicht abgespeicherter Röntgenstrahlung. Das von der Speicherleuchtstoffschicht ausgesandte Licht wird von einem Detektionsmittel empfangen und anschließend in elektrische Signale gewandelt, so dass das in der Speicherleuchtstoffschicht abgespeicherte Röntgenstrahlungsbild anschließend sichtbar gemacht werden kann. Das Röntgenstrahlungsbild kann beispielsweise direkt auf einem Monitor dargestellt oder auch auf einen fotografischen Röntgenfilm geschrieben werden.

Aus der Patentschrift US 5,265,865 ist eine Vorrichtung zum Auslesen von in einer Speicherleuchtstoffplatte abgespeicherten Bildinformationen bekannt. Diese bekannte Vorrichtung enthält eine Strahlungsquelle und ein Detektionsmittel, mit denen ein abgespeichertes Röntgenstrahlungsbild ausgelesen wird. Die Speicherleuchtstoffplatte befindet sich in einer Kassette. Diese Kassette wird in die bekannte Vorrichtung eingeschoben, um anschließend die in der Kassette befindliche Speicherleuchtstoffplatte aus der Kassette heraus- und in die Vorrichtung hineinzuziehen. Dazu kann die bekannte Auslesevorrichtung unterschiedliche Einrichtungen haben, die zum Heraustransportieren der Speicherleuchtstoffplatte aus der Kassette dienen. Eine solche Möglichkeit zum Herausziehen der Speicherleuchtstoffplatte aus der Kassette besteht beispielsweise darin, dass die Speicherleuchtstoffplatte innerhalb der Speicherleuchtstoffschicht ein Loch enthält, in das ein Pin eines Greifarmes in einer Richtung, die senkrecht zu der Herausziehrichtung liegt, hineinfährt. Befindet sich der Pin des Greifarmes innerhalb des Lochs der Speicherleuchtstoffplatte, dann wird der Greifarm in Herausziehrichtung bewegt. Dadurch kann die Speicherleuchtstoffplatte aus der Kassette heraus- und in die Auslesevorrichtung hineingezogen werden. Gemäß der US 5,265,865 greift somit der Greifarm direkt in ein in der Speicherleuchtstoffschicht befindliches Loch ein. Beim Herausziehen der.Speicherleuchtstoffplatte aus der Kassette wird die Speicherleuchtstoffplatte genau an den Rändern des Loches sehr stark beansprucht. Dies kann dazu führen, dass Teile der Speicherleuchtstoffschicht, die sich im Bereich des Loches befinden, bei zunehmender Beanspruchung durch häufiges Herausziehen wegbrechen. Dadurch vergrößert sich das Loch zunehmend. Des Weiteren besteht die Gefahr, dass ein Herausziehen der Speicherleuchtstoffplatte aus der Kassette überhaupt nicht mehr gewährleistet werden kann, da gerade der in Ziehrichtung stark beanspruchte Speicherleuchtstoff vollständig wegbricht.

Der vorliegenden Erfindung liegt daher die Aufgabe zugrunde, ein sicheres Bewegen einer Speicherleuchtstoffplatte zu ermöglichen

Diese Aufgabe wird durch die Merkmale des Anspruchs 1 gelöst.

Gemäß der vorliegenden Erfindung weist die Speicherleuchtstoffplatte eine Kontur auf, die ein eigenständiges Formteil ist und an der Trägerschicht angebracht ist. Dadurch kann die Kontur unabhängig von der Trägerschicht ausgestaltet werden. Kontur und Trägerschicht können jeweils auf unterschiedliche Anforderungen abgestimmt sein. Die Kontur ist erfindungsgemäß so ausgestaltet, dass sie optimal mit einem Greifarm zusammenwirkt, der in einer Vorrichtung zum Auslesen der Speicherleuchtstoffplatte angeordnet sein kann. Dazu weist die Kontur eine Aussparung auf, in die dieser Greifarm eingreift. Dadurch kann bei einem Herausziehen oder Hineinschieben der Speicherleuchtstoffplatte in eine Kassette ein sicheres Transportieren der Speicherleuchtstoffplatte gewährleistet werden. Ein Verlieren der Speicherleuchtstoffplatte beim Transportieren kann vermieden werden.

Der Greifarm kann auf besonders einfache Weise in die Kontur eingreifen, da diese in einem Randbereich der Trägerschicht angebracht ist. Dadurch kann der Greifarm auf einfache Weise durch eine Öffnung in der Stirnseite der Speicherleuchtstoffplatte in die Kontur eingreifen. Der Bewegungsablauf des Greifarmes beim Eingreifen in die Kontur kann daher besonders einfach ausgestaltet sein.

Die Kontur wird durch eine Aussparung gebildet, die so angeordnet ist, dass zum Rand der Speicherieuchtstoffplatte hin eine Öffnung entsteht, und die auf der linken Seite eine erste Ausbuchtung und auf der rechten Seite eine zweite Ausbuchtung aufweist. Durch diese Öffnung kann der Greifarm einfachheitshalber in die Kontur einfahren und durch eine einfache Seitwärtsbewegung nach Einfahren in die Kontur in die Ausbuchtungen bewegt werden und dabei die Kontur fest greifen.

In einer besonders vorteilhaften Ausgestaltung sind Trägerschicht und Kontur aus unterschiedlichen Materialien. Über die unterschiedlichen Materialeigenschaften können daher Trägerschicht und Kontur besonders gut auf unterschiedliche Anforderungen abgestimmt werden. Die Trägerschicht kann insbesondere auf diagnostische Anforderungen abgestimmt werden. Die Kontur dagegen kann insbesondere für eine hohe Verschleißfestigkeit ausgelegt sein. Die erfindungsgemäße Speicherleuchtstoffplatte kann dadurch für eine sehr große Anzahl von Verwendungen vorgesehen werden. Die Trägerschicht kann, unabhängig von der Kontur und abhängig von den jeweiligen Anwendungsfällen, dicker oder dünner als die Kontur sein. Die Kontur kann, unabhängig von der Trägerschicht bezüglich Material und/oder Form auf den Greifarm abgestimmt sein. Die Kontur ist insbesondere aus gehärtetem Metall, wodurch eine besonders hohe Verschleißfestigkeit gegeben ist. Dadurch kann auch nach sehr häufigem Gebrauch - und damit starker Belastung der Kontur - weiterhin eine enge Toleranz der Abmessungen der Kontur gewährleistet sein.

In einer weiteren vorteilhaften Ausgestaltung der Erfindung ist in einem Bereich der Trägerschicht, der insbesondere entlang einer Stirnseite der Speicherleuchtstoffplatte verläuft, keine Speicherleuchtstoffschicht aufgebracht. In diesem Bereich ist dann die Kontur angeordnet. Dadurch wird in einem Bereich, der nicht für ein Abspeichern von Bildinformationen benutzt werden kann, erst gar keine Speicherleuchtstoffschicht aufgebracht. Die Speicherleuchtstoffschicht kann daher auf denjenigen Bereich begrenzt bleiben, der auch tatsächlich zum Abspeichern von Bildinformationen genutzt werden kann.

Zur Gewährleistung einer hochfesten und präzisen Verbindung zwischen Kontur und Trägerschicht ist die Kontur vorteilhafterweise mit der Trägerschicht vernietet. Alternativ oder zusätzlich kann die Kontur mit der Trägerschicht verklebt sein. Dazu sollte ein hochfester Kleber eingesetzt werden.

Vorteilhafterweise enthält die Speicherleuchtstoffplatte mehrere Konturen. Dadurch ist ein gleichmäßiges Transportieren der Speicherleuchtstoffplatte möglich. Dies gilt insbesondere dann, wenn die mehreren Konturen an der gleichen Stirnseite der Speicherleuchtstoffplatte angeordnet sind. Ein präzises und stabiles Transportieren ist vor allem dann gewährleistet, wenn die Konturen nahe an einem Eckbereich der Stirnseite zu einer anderen Stirnseite angeordnet sind.

Die Speicherleuchtstoffplatte kann eine weitere Kontur enthalten, die zum Fixieren und/oder Positionieren der Speicherleuchtstoffplatte in einer Kassette dienen kann. Durch diese weitere Kontur ist es möglich, die Speicherleuchtstoffplatte in der Kassette an einem definierten Ort zu fixieren, so dass dem Greifarm der Vorrichtung zum Auslesen der Speicherleuchtstoffplatte auf einfache Weise möglich ist, in die Kontur zum Greifen der Speicherleuchtstoffplatte einzugreifen. Fixieren kann in diesem Zusammenhang hier sowohl ein einfaches Halten der Speicherleuchtstoffplatte in der Kassette, so dass die Speicherleuchtstoffplatte nicht aus der Kassette herausrutschen kann, als auch ein festes Klemmen der Speicherleuchtstoffplatte in der Kassette bedeuten.

Die weitere Kontur kann vorteilhafterweise gegenüber der Trägerschicht ebenfalls als eigenständiges Teil ausgestaltet sein. Dadurch wird es möglich, auch die weitere Kontur bezüglich Form und Material unabhängig von der Trägerschicht auf die jeweiligen Anforderungen abzustimmen. Die weitere Kontur soll insbesondere ein Verrutschen der Speicherleuchtstoffplatte in der Kassette verhindern. Dadurch wird ein Verschleißen der Speicherleuchtstoffplatte reduziert. Durch eine hochfeste Verbindung der weiteren Kontur mit der Trägerschicht und einem festen Fixieren kann eine Verformung der Speicherleuchtstoffplatte, insbesondere bei einem Herunterfallen der Kassette auf den Fußboden, weitgehend vermieden werden.

Die weitere Kontur kann einfachheitshalber durch eine Aussparung in der Trägerschicht realisiert sein. Diese kann z. B. eine rechteckförmige Aussparung im Randbereich sein. Besonders vorteilhaft ist allerdings, wenn die Kontur in einem Innenbereich der Trägerschicht angebracht ist. Dadurch ist eine besonders gute Fixierung gegeben.

Weitere vorteilhafte Ausgestaltungen der Erfindung können den abhängigen Patentansprüchen entnommen werden.

Im Folgenden werden die Erfindung und ihre Vorteile anhand von Ausführungsbeispielen beschrieben.

Es zeigen:
- Fig.1: ein nicht zu der Erfindung gehörendes Ausführungsbeispiel einer Speicherleuchtstoffplatte mit Konturen zum Greifen und Fixieren,
- Fig. 2: eine detailliertere Darstellung der in Fig. 1 gezeigten Konturen zum Greifen und Fixieren,
- Fig. 3: ein Ausführungsbeispiel einer Röntgenkassette mit einer Speicherleuchtstoffplatte gemäß Fig. 1.
- Fig. 4: ein erfindungsgemäßes Ausführungsbeispiel der Konturen zum Greifen und Fixieren,
- Fig. 5: ein Beispiel eines Greifens und Fixierens der erfindungsgemäßen Speicherleuchtstoffplatte und
- Fig. 6A, B: ein weiteres Beispiel von Konturen zum Fixieren und zum Fixieren verwendbaren kegelförmig ausgestalteten Fixierbolzen.

Im Folgenden werden für gleiche und gleich wirkende Elemente durchweg gleiche Bezugszeichen verwendet.

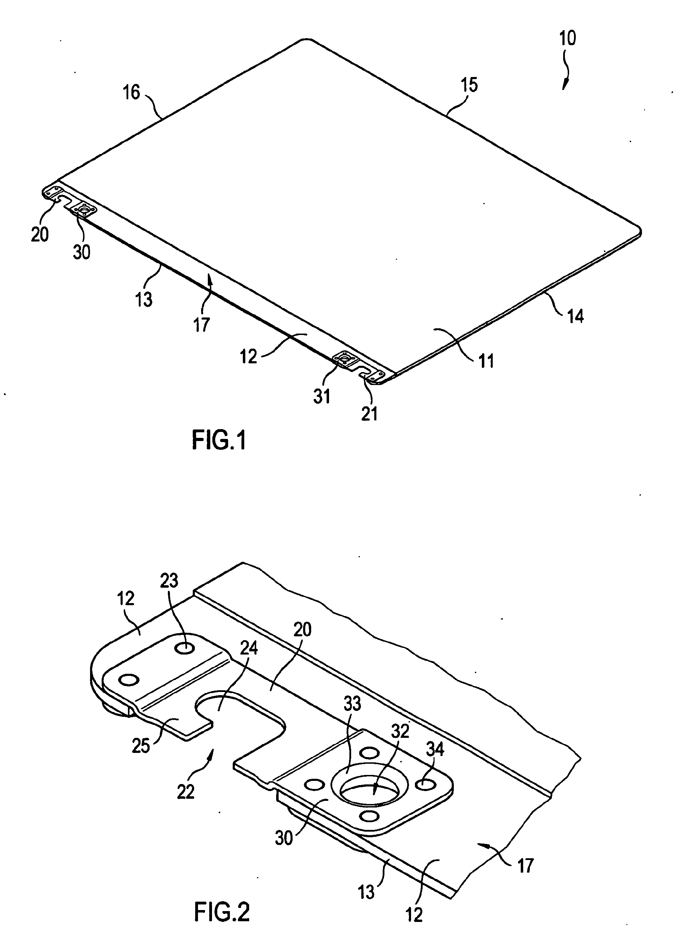

Die Fig. 1 zeigt eine nicht zu der Erfindung gehörende Speicherleuchtstoffplatte 10. Die Speicherleuchtstoffplatte 10 enthält eine Speicherleuchtstoffschicht 11, die auf einer Trägerschicht 12 aufgebracht ist. Die Speicherleuchtstoffplatte 10 dient zum Abspeichern von Röntgeninformationen, die durch Bestrahlung mit Röntgenstrahlung in der Speicherleuchtstoffschicht 11 abgespeichert werden.

Die Speicherleuchtstoffschicht 11 kann insbesondere eine spezielle kristallite, nadelförmige Struktur aufweisen, wie sie beispielsweise aus der Patentschrift DE 198 59 747 C1 bekannt ist. Diese spezielle Speicherleuchtstoffschicht weist eine Vielzahl von "Nadeln" auf, die zum Führen sowohl von Anregungsstrahlung, die zum Anregen der Speicherleuchtstoffschicht verwendet wird, als auch von Emissionsstrahlung, die aufgrund der Anregung von der Speicherleuchtstoffschicht emittiert wird, dienen kann. Für eine solche Speicherleuchtstoffschicht werden kristalline "Nadeln" gezüchtet. Eine solche Nadel-Speicherleuchtstoffschicht ist aus Alkalihalogeniden, wie z. B. Cäsiumbromid, aufgebaut. Diese strukturierten Alkalihalogenide können mit geeigneten Aktivatoren, wie z. B. Gallium, Thallium, Europium, etc. dotiert sein. Üblicherweise sind die einzelnen Nadeln gegeneinander durch einen kleinen Luftspalt getrennt. Anregungsstrahlung, die unter einem bestimmten Winkel in eine solche Nadel einfällt, wird weitgehend ohne Streuung weitergeleitet, bis sie im Kristallgitter der "Nadel" ein Informationszentrum trifft, in dem Röntgeninformationen abgespeichert sind. Die durch die Anregung des Informationszentrums entstehende Emissionsstrahlung wird in der entsprechenden "Nadel" weitergeleitet und aus dieser herausgeführt, so dass sie von einem Detektionsmittel detektiert werden kann. Eine solche nadelförmige Speicherleuchtstoffschicht ist insbesondere aus der europäischen Patentanmeldung EP 0 751 200 A1 bekannt. Durch die Verwendung dieser speziellen Speicherleuchtstoffschicht wird eine Streuung der Anregungsstrahlung und der Emissionsstrahlung innerhalb der Speicherleuchtstoffschicht reduziert.

In dem Beispiel gemäß der Fig. 1 ist nicht auf die gesamte Trägerschicht 12 die Speicherleuchtstoffschicht 11 aufgebracht. In einem Bereich 17 der Trägerschicht 12 ist keine Speicherleuchtstoffschicht auf die Trägerschicht 12 aufgebracht. Die Speicherleuchtstoffplatte 10 hat eine annäherend rechteckige Form. Sie hat zwei parallel liegende lange Stirnseiten 13 und 15 sowie zwei parallel liegende kurze Stirnseiten 14 und 16. Die kurzen Stirnseiten 14 und 16 verlaufen senkrecht zu den langen Stirnseiten 13 und 15. Die Speicherleuchtstoffplatte 10 kann insbesondere ein Format mit den Maßen von 14"x17" haben. Der Bereich 17, in dem keine Speicherleuchtstoffschicht 11 auf die Trägerschicht 12 aufgebracht ist, verläuft annähernd entlang der langen Stirnseite 13 der Speicherleuchtstoffplatte 10. An der äußeren linken Seite der Stirnseite 13, zur Stirnseite 16 hin, ist innerhalb des Bereichs 17 eine erste Kontur 20 zum Greifen der Speicherleuchtstoffplatte 10 an der Trägerschicht 12 angebracht. Daneben befindet sich innerhalb des Bereichs 17 eine zweite Kontur 30. Diese zweite Kontur 30 dient zum Fixieren der Speicherleuchtstoffplatte 10 in einer Röntgenkassette. In dem rechten Randbereich, zur Stirnseite 14 der Speicherleuchtstoffplatte 10 hin, ist in dem Bereich 17 eine dritte Kontur 21 zum Greifen der Speicherleuchtstoffplatte 10 in der Trägerschicht angebracht. Direkt benachbart zu dieser dritten Kontur 21 befindet sich in der Trägerschicht 12 eine vierte Kontur 31. Diese vierte Kontur 31 dient ebenfalls zum Fixieren der Speicherleuchtstoffplatte 10 in der Röntgenkassette. Die beiden Konturen 30 und 31 zum Fixieren der Speicherleuchtstoffplatte 10 sind hier vorteilhafterweise entlang der gleichen Stirnseite 13 angebracht. Sie befinden sich in dem Bereich 17, in dem sich keine Speicherleuchtstoffschicht 11 befindet. Es ist allerdings auch möglich, die Konturen zum Fixieren der Speicherleuchtstoffplatte 10 an einer oder mehreren der anderen Stirnseiten 14, 15, 16 anzubringen.

Fig. 2 zeigt die detailliertere Darstellung der ersten Kontur 20 und der zweiten Kontur 30. Die erste Kontur 20 und die zweite Kontur 30 sind hier als einteiliges Formteil ausgestaltet. Es ist allerdings ebenso möglich, die beiden Konturen 20 und 30 unabhängig voneinander als jeweils eigenständige Formteile auszugestalten. Die beiden Konturen 20 und 30 sind hier aus gehärtetem Metall. Dieses ist besonders verschleißfest. Es ist aber auch möglich, die Konturen aus Kunststoff, insbesondere einem glasfaserverstärkten Kunststoff herzustellen. Die beiden Konturen 20 und 30 sind mit der Trägerschicht 12 mechanisch hochfest und präzise verbunden. Dies wird hier einfachheitshalber über Nieten erreicht. Beispielhaft sind in der Fig. 2 eine Niete 23 auf der linken Seite der Kontur 20 und eine Niete 34 auf der rechten Seite der Kontur 30 dargestellt. Zusätzlich zu dem Vernieten der Konturen 20 und 30 mit der Trägerschicht 12 können die beiden Konturen 20 und 30 mit der Trägerschicht 12 verklebt sein. Es ist auch möglich, die Konturen mit der Trägerschicht zu verschweißen, wenn die für die Konturen und die Trägerschicht gewählten Materialien dies zulassen. Die Trägerschicht 12 ist hier aus einem Kunststoffmaterial hergestellt. Dieses Kunststoffmaterial ist speziell auf diagnostische Anforderungen, die an die Speicherleuchtstoffplatte 10 gestellt werden, abgestimmt.

Die erste Kontur 20 wird mittels einer Aussparung 22 gebildet, die in einem Randbereich der Trägerschicht 12, d. h. hier zur Stirnseite 13 hin, eine Öffnung aufweist. Die Aussparung 22 ist hier L-förmig, wie eine Art Haken, ausgestaltet. Das heißt, sie weist hier auf der linken Seite der Aussparung 22, hin zur Stirnseite 16, eine Ausbuchtung 24 auf. Dadurch entsteht in der Kontur 20 ein Steg 25, der dem Greifarm zum Greifen dient. Der Greifarm kann durch die zur Stirnseite 13 hin vorhandene Öffnung der Aussparung 22 in die Aussparung 22 hineinfahren. Anschließend wird er nach links in die Ausbuchtung 24 bewegt. Beim Herausziehen der Speicherleuchtstoffplatte 10 aus der Röntgenkassette stößt er an dem Steg 25 auf einen Widerstand, so dass das Herausziehen der Speicherleuchtstoffplatte 10 bewirkt werden kann.

Die zweite Kontur 30 wird mittels einer Öffnung 32 gebildet, die hier eine kreisrunde Form hat. Die zweite Kontur 30 hat einen oberen Rand 33, der kegelstumpfförmig abgeflacht ist. Zusätzlich oder alternativ kann der obere Rand 33 abgerundet sein. Die zweite Kontur 30 ist in einem Innenbereich des Bereichs 17 an der Trägerschicht 12 angebracht. Zur Stirnseite 13 hin entsteht daher im Bereich der zweiten Kontur 30 keine Öffnung. Durch die kreisrunde Ausgestaltung der Öffnung 32 und die kegelstumpfförmige oder abgerundete Ausgestaltung des oberen Randes 33 ist es auf einfache Weise möglich, die Speicherleuchtstoffplatte 10 in der Röntgenkassette zu fixieren. Beispielsweise kann ein in der Röntgenkassette befindlicher Bolzen mit einem runden Querschnitt von oben in die Öffnung 32 hineinfahren und die Speicherleuchtstoffplatte 10 im Bereich der Kontur 30 gegen eine unter der Kontur 30 befindliche Fläche pressen. Eine auf die Röntgenkassette aufgebrachte Kraft, die beispielsweise beim Herunterfallen der Röntgenkassette auf den Boden entstehen kann, wird somit nur im Bereich der Konturen 30 und 31 (letztere ist in der Fig. 2 nicht weiter dargestellt) auf die Speicherleuchtstoffplatte 10 übertragen. Aufgrund der hochfesten Verbindung der Konturen 30 und 31 mit der Trägerschicht 12 kann in einem solchen Fall eine Beschädigung der Speicherleuchtstoffplatte verhindert werden. Dies gilt insbesondere dann, wenn die Größen der Röntgenkassette und der Speicherleuchtstoffplatte 10 sowie die Positionen der Konturen zum Fixieren so gewählt sind, dass die Ränder der Speicherleuchtstoffplatte 10 die Seitenwände der Röntgenkassette nicht berühren. Über die Seitenwände der Röntgenkassette können somit, z. B. bei einem Fall der Röntgenkassette, keine Kraftübertragungen auf die Speicherleuchtstoffplatte 10 erfolgen. Aufgrund der kegelstumpfförmigen oder abgerundeten Ausgestaltung des oberen Randes 33 der zweiten Kontur 30 kann der in der Röntgenkassette zum Fixieren der Speicherleuchtstoffplatte 10 vorgesehene Bolzen einfacher in die Öffnung 32 einfahren. Der kegelstumpfförmig oder abgerundet ausgestaltete obere Rand 33 dient als eine Art Führung, die den Bolzen in die Öffnung 32 hineinführt. Aufgrund der runden Ausgestaltung der Öffnung 32 ist eine sehr genaue Zuordnung der Speicherleuchtstoffplatte 10 zu dem Bolzen gegeben. Ein bei der Ausgestaltung des Bolzens und der zweiten Kontur 30 auftretendes Spiel fällt in alle Richtungen der kreisrunden Öffnung 32 gleich aus. Eine kreisrunde Ausgestaltung der zweiten Kontur 30 ist insofern vorteilhaft gegenüber anderen Formen der Konturen zum Fixieren der Speicherleuchtstoffplatte 10. Generell sind allerdings auch andere Formen von Konturen zum Fixieren möglich.

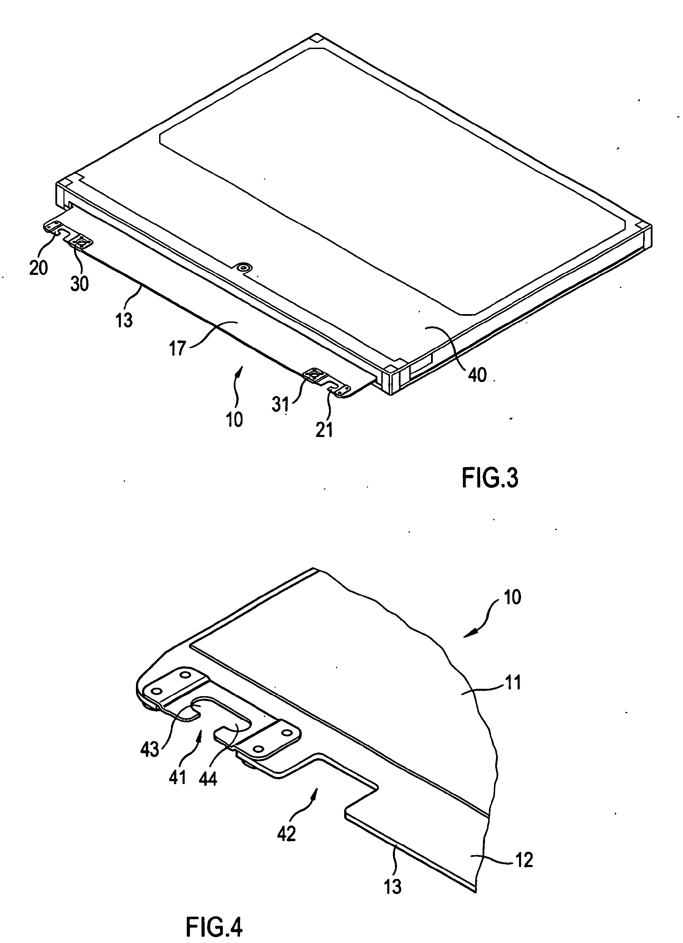

Die Fig. 3 zeigt ein Ausführungsbeispiel einer Röntgenkassette 40, in die die Speicherleuchtstoffplatte 10 eingeführt ist. In der Darstellung gemäß Fig. 3 ragen die Stirnseite 13 und der hinter ihr befindliche Bereich 17 mit den Konturen 20, 30, und 21, 31 aus einer Öffnung der Röntgenkassette 40 heraus.

Fig. 4 zeigt ein erfindungsgemäßes Ausführungsbeispiel einer Ausgestaltung der Konturen zum Greifen der Speicherleuchtstoffplatte 10 und zum Fixieren der Speicherleuchtstoffplatte 10 in einer Röntgenkassette. Die Fig. 4 zeigt eine Kontur 41, die zum Greifen der Speicherleuchtstoffplatte 10 durch einen in einer Richtung zum Auslesen der Speicherleuchtstoffplatte 10 befindlichen Greifarm dienen kann. Zusätzlich zu einer ersten Ausbuchtung 43 auf der linken Seite der Kontur 41, wie sie bereits in zumindest ähnlicher Weise in der Fig. 2 dargestellt ist, weist die Kontur 41 hier eine zweite Ausbuchtung 44 auf ihrer rechten Seite auf. Die beiden Ausbuchtungen 43 und 44 sind vorteilhafterweise gleich. Dadurch kann die Produktion und Montage der Speicherleuchtstoffplatte 10 einfacher erfolgen. Beim Aufbringen der Kontur 41 auf die Trägerschicht 12 muss nämlich nicht auf die Ausrichtung der Ausbuchtung der Kontur 41 geachtet werden, da die Kontur 41 symmetrisch ausgestaltet ist. Insofern könnte auch die zweite Ausbuchtung 44 auf der linken Seite der Kontur 41 und die erste Ausbuchtung 43 auf der rechten Seite der Kontur 41 angeordnet sein. Beide Ausbuchtungen 43 und 44 sind gleich. Die Kontur 41 wird insofern mittels einer T-förmigen oder ankerförmigen Aussparung gebildet.

Die Fig. 4 zeigt des Weiteren eine Kontur 42, die zum Fixieren der Speicherleuchtstoffplatte 10 in einer Röntgenkassette dienen kann. Diese Kontur 42 wird hier durch eine in der Trägerschicht 12 eingebrachte Aussparung gebildet. Die Kontur 42 hat hier eine rechteckförmige Ausgestaltung und ist zur Stirnseite 13 hin offen. Als Kontur zum Fixieren der Speicherleuchtstoffplatte 10 ist insofern in diesem Ausführungsbeispiel gemäß der Fig. 4 kein eigenständiges Formteil notwendig. Ein beispielsweise von der Innenseite der Röntgenkassette in die Aussparung 42 herunterfahrender, insbesondere rechteckförmiger Bolzen kann ein Herausfallen der Speicherleuchtstoffplatte 10 aus einer geöffneten Röntgenkassette verhindern. Zum Fixieren der Speicherleuchtstoffplatte 10 mittels der Kontur 42 kann die Speicherleuchtstoffplatte 10 insbesondere durch einen in die Kontur 42 eingreifenden Bolzen gegen die Rückwand der Röntgenkassette gepresst werden. Durch ein solches Fixieren und Positionieren der Speicherleuchtstoffplatte 10 in der Röntgenkassette ist es für einen Greifarm auf einfache Weise möglich, in die Kontur 41 einzufahren, um die Speicherleuchtstoffplatte 10 zum Herausziehen aus der Röntgenkassette zu greifen.

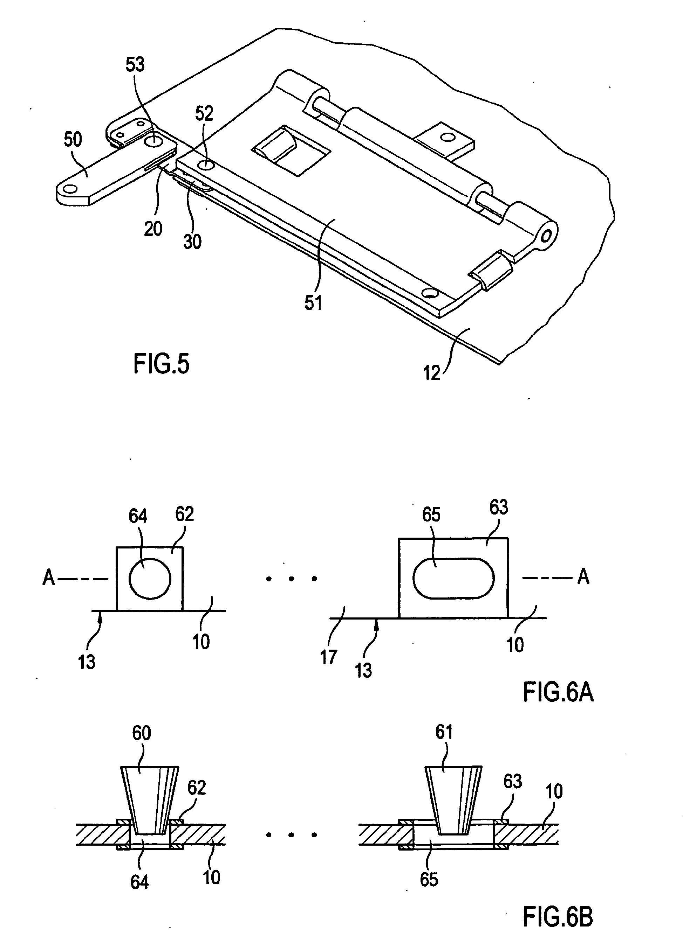

Die Fig. 5 zeigt ein Beispiel eines Greifarms 50, der in die erste Kontur 20 eingegriffen hat. Ein in dem Greifarm 50 befindlicher Bolzen mit insbesondere rundem Querschnitt kann auf einfache Weise in die Kontur 20 hineinfahren. In der Fig. 5 ist die obere Seite 53 eines nach unten in die Kontur 20 ragenden Bolzens dargestellt, der mittels des Greifers in die erste Kontur 20 eingefahren und zum Herausziehen und Hineinschieben der Speicherleuchtstoffplatte 10 in die Röntgenkassette verwendet wird. Die Fig. 5 zeigt des Weiteren eine Steuerklappe 51, die innerhalb der Röntgenkassette befestigt sein kann. An der linken Seite, direkt über der Öffnung 32, ist in der Steuerklappe 51 ein weiterer Bolzen 52 angebracht, der dazu dient, die Speicherleuchtstoffplatte 10 in der Röntgenkassette zu fixieren. Die Steuerklappe 51 wird durch einen Mechanismus heruntergeklappt, so dass der Bolzen 52 in die zweite Kontur 30 hineinfährt. Dadurch wird die Speicherleuchtstoffplatte 10 fixiert. Eine weitere Steuerklappe (nicht dargestellt) dient zum Fixieren der Speicherleuchtstoffplatte 10 mittels der vierten Kontur 31.

Die Fig. 6A zeigt ein weiteres Ausführungsbeispiel zur Ausgestaltung der Fixierkonturen. In der Fig. 6A ist ein Ausschnitt des Bereichs 17 der Speicherleuchtstoffplatte 10 dargestellt. Auf der linken Seite ist eine Kontur 62 zum Fixieren der Speicherleuchtstoffplatte 10 und auf der rechten Seite eine weitere Kontur 63 zum Fixieren der Speicherleuchtstoffplatte 10 an der Speicherleuchtstoffplatte 10 angebracht. Die beiden Konturen 62 und 63 sind hier entlang der gleichen Stimseite 13 der Speicherleuchtstoffplatte 10 angeordnet. Die Kontur 62 wird mittels einer runden Öffnung 64 in ihrem Inneren gebildet. Die Kontur 63 wird mittels einer Öffnung 65 in ihrem Inneren gebildet, die eine Form eines Langloches hat.

Die Fig. 6B zeigt eine Schnittdarstellung entlang der Schnittlinie AA der Fig. 6A. Zusätzlich sind ein erster Bolzen 60 und ein zweiter Bolzen 61 dargestellt, die zum Fixieren der Speicherleuchtstoffplatte 10 in der Röntgenkassette dienen und die an Steuerklappen, wie beispielsweise der Steuerklappe 51 aus Fig. 5, befestigt sind. Der erste Bolzen 60 ist oberhalb der Öffnung 64 und der zweite Bolzen 61 oberhalb der Öffnung 65 plaziert. Die beiden Bolzen 60 und 61 sind kegelförming ausgestaltet und in vertikaler Richtung verfahrbar. Dadurch läßt sich beim Herunterfahren der Bolzen 60 und 61 ein spielfreier Formschluss mit den beiden Konturen 62 und 63 erreichen. Aufgrund der langlochförmigen Ausgestaltung der Öffnung 65 wird eine Überbestimmung der Anordnung vermieden. Der heruntergefahrene Bolzen 61 erzielt mit der Kontur 63 in Ausbreitungsrichtung der Stirnseite 13 keinen Formschluss, sondern nur in Richtung senkrecht zur Ausbreitungsrichtung der Stirnseite 13. Die Toleranzen der Konturen 62 und 63 sowie der Bolzen 60 und 61 müssen vorteilhafterweise nicht eng sein.

## Patentansprüche

1. Speicherleuchtstoffplatte (10) zum Abspeichern von Bildinformationen mit einer Trägerschicht (12), einer Speicherleuchtstoffschicht (11), die auf der Trägerschicht (12) aufgebracht ist, und einer Kontur (41), die als gegenüber der Trägerschicht (12) eigenständiges Teil ausgestaltet ist, mit der Trägerschicht (12) verbunden ist und eine Aussparung (41) aufweist, die in einem Randbereich der Trägerschicht (12) zu einer Stirnseite (13) der Trägerschicht (12) hin eine Öffnung aufweist, wobei die Aussparung (41) auf einer linken Seite der Aussparung (41) eine erste Ausbuchtung (43) und auf einer rechten Seite der Aussparung (41) eine zweite Ausbuchtung (44) aufweist, so dass zwei Stege entstehen, so dass ein Greifarm durch die zur Stirnseite (13) hin vorhandene Öffnung der Aussparung (41) in die Aussparung (41) hineinfahren und anschließend in die Ausbuchtungen (43 bzw. 44) bewegt werden kann, wobei die Stege dem Greifarm zum Greifen dienen können.

2. Speicherleuchtstoffplatte nach Anspruch 1, wobei die Kontur (41) in einem Randbereich (13) der Trägerschicht (12) mit dieser verbunden ist.

3. Speicherleuchtstoffplafte nach einem der vorhergehenden Ansprüche, wobei die Trägerschicht (12) und die Kontur (41) aus unterschiedlichen Materialien bestehen.

4. Speicherleuchtstoffplatte nach einem der vorhergehenden Ansprüche, wobei die Trägerschicht (12) einen Bereich (17) aufweist, in dem keine Speicherleuchtstoffschicht (11) aufgebracht ist, und die Kontur (41) in diesem Bereich (17) angeordnet ist.

5. Speicherleuchtstoffplatte nach Anspruch 4, wobei sie zwei parallel zueinander angeordnete kurze Stirnseiten (14, 16) und zwei parallel zueinander angeordnete lange Stirnseiten (13, 15) hat und die Kontur (41) in einer Stirnseite (13) angeordnet ist, die sich in dem Bereich (17) der Trägerschicht (12) befindet, in dem keine Speicherleuchtstoffschicht (11) aufgebracht ist.

6. Speicherleuchtstoffplatte nach Anspruch 3, wobei das zweite Material der Kontur (41) ein insbesondere gehärtetes Metallmaterial ist.

7. Speicherleuchtstoffplatte nach einem der vorhergehenden Ansprüche, wobei die Kontur (41) mit der Trägerschicht (12) vernietet ist.

8. Speicherleuchtstoffplatte nach einem der vorhergehenden Ansprüche, wobei die Kontur (41) mit der Trägerschicht (12) verklebt ist.

9. Speicherleuchtstoffplatte nach Anspruch 1, wobei die beiden Ausbuchtungen (43, 44) gleich sind, wodurch die Aussparung (41) insbesondere T-förmig oder ankerförmig ist.

10. Speichedeuchtstoffplatte nach einem der vorhergehenden Ansprüche, wobei sie mehrere Konturen (20, 21, 41, 42) aufweist.

11. Speicherleuchtstoffplatte nach Anspruch 10, wobei die mehreren Konturen (20, 21, 41, 42) in der gleichen Stirnseite (13) der Speicherleuchtstoffplatte (10) angeordnet sind.

12. Speicherleuchtstoffplatte nach einem der vorhergehenden Ansprüche, wobei sie eine weitere Kontur (30, 31) zum Fixieren der Speicherleuchtstoffplatte (10) in einer Kassette (40) aufweist.

13. Speicherleuchtstoffplatte nach Anspruch 12, wobei die weitere Kontur (30, 31) als gegenüber der Trägerschicht (12) eigenständiges Teil ausgestaltet und mit der Trägerschicht (12) verbunden ist.

14. Speicherleuchtstoffplatte nach Anspruch 12 oder Anspruch 13, wobei, die weitere Kontur (30, 31) durch eine Aussparung (42) in der Trägerschicht (12) gebildet ist.

15. Speicherleuchtstoffplatte nach einem der Ansprüche 12 bis 14, wobei die weitere Kontur (30, 31) in einem Innenbereich (17) der Trägerschicht (12) angebracht ist.

16. Röntgenkassette (40) mit einer Speicherleuchtstoffplatte (10) nach einem der vorhergehenden Ansprüche.

## Claims

1. A storage phosphor panel (10) for storing image information, comprising a substrate layer (12), a storage phosphor layer (11), which is applied to the substrate layer (12), and a contour (41), which is configured as an autonomous part with respect to the substrate layer (12) and is connected to the substrate layer (12) and exhibits a cutout (41), which exhibits an opening in an edge region of the substrate layer (12) toward an end side (13) of the substrate layer (12), the cutout (41) exhibiting a first bulge (43) on a left-hand side of the cutout (41) and a second bulge (44) on a right-hand side of the cutout (41), so that two webs are produced, so that a gripping arm can enter the cutout (41) through the opening in the cutout (41) which is present toward the end side (13) and can be moved subsequently in the bulges (43 and 44, respectively), wherein the webs may be used for gripping by the gripping arm.

2. Storage phosphor panel according to claim 1, wherein said contour (41) is connected to the substrate layer (12) in an edge region (13) thereof.

3. Storage phosphor panel according to any of the preceding claims, wherein said substrate layer (12) and said contour (41) are made of different materials.

4. Storage phosphor panel according to any of the preceding claims, wherein said substrate layer (12) exhibits a region (17), in which no storage phosphor layer (11) is applied, and said contour (41) is arranged in said region (17).

5. Storage phosphor panel according to claim 4, further comprising two short end sides (14, 16) arranged parallel to one another and two long end sides (13, 15) arranged parallel to one another, said contour (41) being arranged in an end side (13) situated in the region (17) of said substrate layer (12), in which no storage phosphor layer (11) is applied.

6. Storage phosphor panel according to claim 3, wherein the second material of said contour (41) is in particular a hardened metal material.

7. Storage phosphor panel according to any of the preceding claims, wherein said contour (41) is riveted to said substrate layer (12).

8. Storage phosphor panel according to any of the preceding claims, wherein said contour (41) is adhesively bonded to said substrate layer (12).

9. Storage phosphor panel according to claim 1, wherein said two bulges (43, 44) are identical, as a result of which said cutout (41) is in particular T-shaped or anchor-shaped.

10. Storage phosphor panel according to any of the preceding claims, further comprising several contours (20, 21, 41, 42).

11. Storage phosphor panel according to claim 10, wherein said several contours (20, 21, 41, 42) are arranged in the same end side (13) of said storage phosphor panel (10).

12. Storage phosphor panel according to any of the preceding claims, further comprising a further contour (30, 31) for fixing said storage phosphor panel (10) in a cassette (40).

13. Storage phosphor panel according to claim 12, wherein said further contour (30, 31) is configured as an autonomous part with respect to said substrate layer (12) and is connected to said substrate layer (12).

14. Storage phosphor panel according to claim 12 or 13, wherein said further contour (30, 31) is formed by a cutout (42) in said substrate layer (12).

15. Storage phosphor panel according to any of the claims 12 to 14, wherein said further contour (30, 31) is fitted in an inner region (17) of said substrate layer (12).

16. An X-ray cassette (40) comprising a storage phosphor panel (10) as defined in any of the preceding claims.

## Revendications

1. Plaque luminescente à mémoire (10) pour le stockage d'informations d'image comprenant une couche support (12), une couche luminescente à mémoire (11), qui est appliquée sur la couche support (12), et un contour (41), qui est conçu comme une partie indépendante par rapport à la couche support (12), est relié à la couche support (12) et présente un évidement (41), qui présente une ouverture dans une zone marginale de la couche support (12) en direction d'un côté avant (13) de la couche support (12), l'évidement (41) présentant un premier évasement (43) sur un côté gauche de l'évidement (41) et un second évasement (44) sur un côté droit de l'évidement (41), de sorte qu'il se forme deux nervures, de sorte qu'un bras de préhension peut s'engager à travers l'ouverture, présente en direction du côté avant (13), de l'évidement (41) dans l'évidement (41) et peut être déplacé ensuite dans les évasements (43 ou 44), les nervures pouvant servir au bras de préhension pour la préhension.

2. Plaque luminescente à mémoire selon la revendication 1, le contour (41) étant relié dans une zone marginale (13) de la couche support (12) à celle-ci.

3. Plaque luminescente à mémoire selon l'une quelconque des revendications précédentes, la couche support (12) et le contour (41) étant constitués à base de différents matériaux.

4. Plaque luminescente à mémoire selon l'une quelconque des revendications précédentes, la couche support (12) présentant une zone (17) dans laquelle aucune couche luminescente à mémoire (11) n'est appliquée, et le contour (41) étant disposé dans cette zone (17).

5. Plaque luminescente à mémoire selon la revendication 4, sachant qu'elle présente deux côtés avant (14, 16) courts, disposés parallèlement entre eux, et deux côtés avant (13, 15) longs, disposés parallèlement entre eux et sachant que le contour (41) est disposé dans un côté avant (13), qui se trouve dans la zone (17) de la couche support (12), dans laquelle aucune couche luminescente à mémoire (11) n'est appliquée.

6. Plaque luminescente à mémoire selon la revendication 3, le second matériau du contour (41) étant un matériau métallique en particulier trempé.

7. Plaque luminescente à mémoire selon l'une quelconque des revendications précédentes, le contour (41) étant rivé avec la couche support (12).

8. Plaque luminescente à mémoire selon l'une quelconque des revendications précédentes, le contour (41) étant collé avec la couche support (12).

9. Plaque luminescente à mémoire selon la revendication 1, les deux évasements (43, 44) étant identiques, l'évidement (41) étant en particulier en forme de T ou en forme d'ancre.

10. Plaque luminescente à mémoire selon l'une quelconque des revendications précédentes, sachant qu'elle présente plusieurs contours (20, 21, 41, 42).

11. Plaque luminescente à mémoire selon la revendication 10, les plusieurs contours (20, 21, 41, 42) étant disposés dans le même côté avant (13) de la plaque luminescente à mémoire (10).

12. Plaque luminescente à mémoire selon l'une quelconque des revendications précédentes, sachant qu'elle présente un autre contour (30, 31) pour la fixation de la plaque luminescente à mémoire (10) dans une cassette (40).

13. Plaque luminescente à mémoire selon la revendication 12, l'autre contour (30, 31) étant conçu comme une partie indépendante par rapport à la couche support (12) et étant relié à la couche support (12).

14. Plaque luminescente à mémoire selon la revendication 12 ou la revendication 13, l'autre contour (30, 31) étant formé par un évidement (42) dans la couche support (12).

15. Plaque luminescente à mémoire selon l'une quelconque des revendications 12 à 14, l'autre contour (30, 31) étant placé dans une zone intérieure (17) de la couche support (12).

16. Cassette radiographique (40) avec une plaque luminescente à mémoire (10) selon l'une quelconque des revendications précédentes.
